# EUROPÄISCHE PATENTSCHRIFT

(11) **EP 0 409 330 B1**
(45) Veröffentlichungstag und Bekanntmachung des Hinweises auf die Patenterteilung: **12.04.1995**
(21) Anmeldenummer: 90201905.8
(22) Anmeldetag: 13.07.1990
(51) Int. Cl.: G06F 13/18

(54) **Schaltungsanordnung zum Steuern des Zugriffs auf einen Speicher**
Memory access control circuit
Circuit de commande d'accès d'une mémoire

(30) Priorität: 19.07.1989 DE 3923872
(43) Veröffentlichungstag der Anmeldung: 23.01.1991
(73) Patentinhaber: Philips Patentverwaltung GmbH, 22335 Hamburg (DE); Philips Electronics N.V., 5621 BA Eindhoven (NL)
(72) Erfinder: Plog, Jürgen, D-2000 Hamburg 20 (DE); Wille, Thomas, Dr., D-2000 Hamburg 56 (DE); Vignau von, Ralph, D -2000 Hamburg 53 (DE)
(74) Vertreter: Poddig, Dieter, Dipl.-Ing.

(56) Entgegenhaltungen:
- DE-A- 3 502 721
- US-A- 4 796 232
- PATENT ABSTRACTS OF JAPAN, Band 12, Nr. 460 (P-795)[3307], 5. Dezember 1988;& JP-A-63 183 678 (MATSUSHITA) 29-07-1988

## Beschreibung

Die Erfindung betrifft eine Schaltungsanordnung zum Steuern des Zugriffs auf einen Speicher durch mindestens zwei Prozessoren mit einer taktgesteuerten Steuerschaltung, die Anforderungssignale von den Prozessoren empfängt und daraus Steuersignale für den Zugriff zum Speicher erzeugt und die Ausführung eines Zugriffs für einen Prozessor unterbricht, wenn vor Beendigung dieses Zugriffs ein Anforderungssignal des bevorrechtigten Prozessors auftritt.

Eine derartige Schaltungsanordnung ist bekannt aus der DE-OS 35 02 721. Darin ist zwar für jeden Prozessor ein Adressenregister vorgesehen, jedoch wird der Datenanschluß des Speichers ohne Zwischenspeicherung über gesteuerte Busschalter mit den entsprechenden Datenanschlüssen der Prozessoren verbunden. Viele Prozessoren benötigen jedoch zum Abgeben und insbesondere zum Übernehmen von Daten eine wesentliche Zeit, z.B. mehrere Taktzyklen eines Taktsignals, und während dieser Zeit muß der Speicher adressiert bleiben, damit die Daten bis zur Verarbeitung bzw. Übernahme gültig bleiben. Ferner muß dann, wenn der Zugriff eines Prozessors niedrigerer Priorität durch den bevorrechtigten Prozessor unterbrochen wird, dieser Prozessor niedrigerer Priorität seine Anforderung ständig wiederholen, bis der Zugriff zum Speicher frei ist. Dies erfordert nicht nur zusätzlichen Zeitaufwand, sondern außerdem zusätzliche programmtechnische Maßnahmen. Die maximale Geschwindigkeit aufeinanderfolgender Zugriffe wird also nicht durch die Geschwindigkeit des Speichers, sondern durch die entsprechende Geschwindigkeit der zugreifenden Prozessoren bestimmt.

Aufgabe der Erfindung ist es daher, eine Schaltungsanordnung der eingangs genannten Art anzugeben, mittels der die maximale Geschwindigkeit des Speichers unabhängig von der Zykluszeit der angeschlossenen Prozessoren für einen Zugriff weitgehend ausgenutzt werden kann.

Diese Aufgabe wird erfindungsgemäß dadurch gelöst, daß für jeden Prozessor für die eingehenden und ausgehenden Daten Datenregister vorgesehen sind, die jeweils zwischen den Datenanschluß des Speichers und den Datenanschluß des betreffenden Prozessors geschaltet sind, und daß die Steuerschaltung bei Auftreten eines Anforderungssignals zum Schreiben von Daten in den Speicher die vom Prozessor gelieferten Daten unmittelbar in das zugehörige Datenregister einschreibt und zum Lesen von Daten aus dem Speicher eine vorgegebene Zeitspanne nach dem Anforderungssignal die am Datenausgang des Speichers abgegebenen Daten in das zugehörige Datenregister einschreibt, sofern in dieser Zeitspanne kein Anforderungssignal des bevorrechtigten Prozessors aufgetreten ist, und bei Auftreten eines Anforderungssignals des bevorrechtigten Prozessors während der Ausführung des Zugriffs für einen anderen Prozessor diesen bevorrechtigten Zugriff zunächst ausführt und danach automatisch den nicht vollständig durchgeführten Zugriff weiterführt.

Durch die Verwendung der Datenregister für jeden Prozessor ergibt sich eine weitgehende Entkopplung zwischen dem Speicher und den angeschlossenen Prozessoren, so daß die Geschwindigkeit aufeinanderfolgender Zugriffe zum Speicher nicht mehr von der Geschwindigkeit der einzelnen Prozessoren abhängt. Die aus dem Speicher ausgelesenen Daten können nämlich in dem Datenregister für den betreffenden Prozessor zur Verfügung gehalten werden, bis diese vom Prozessor verarbeitet sind, während in der Zwischenzeit bereits weitere Zugriffe zum Speicher stattfinden können. Auch beim Schreiben in den Speicher ist insofern eine Entkopplung möglich, daß ein Prozessor unabhängig davon, ob der Zugriff zum Speicher momentan möglich ist, die einzuschreibenden Daten unmittelbar in den Datenspeicher einschreibt und dann in seiner übrigen Verarbeitung fortfahren kann, während das tatsächliche Einschreiben der Daten in den Speicher später stattfindet. Auf diese Weise wird also nicht nur der Betrieb des Speichers durch den Zugriff eines langsamen Prozessors, sondern auch der Betrieb der Prozessoren bei einem Zugriffskonflikt beschleunigt.

Es sind bereits Speicher (Dual port Memory) für den Zugriff von zwei Stellen, insbesondere von zwei Prozessoren bekannt, die Datenregister verwenden. Beispielsweise in der japanischen Patentanmeldung 63-183678 (englische Kurzfassung) sowie in den IEEE ISSCC Konferenzberichten Februar 1985, Seiten 44 und 45 sind Speicheranordnungen beschrieben, bei denen die in den Speicher einzuschreibenden Daten in Registern zwischengespeichert werden. Ferner ist in der US-PS 4,796,232 eine Speichersteuerung angegeben, bei dem nur für den einen Prozessor für die aus dem Speicher ausgelesenen Daten ein Datenregister vorgesehen ist. Datenregister für sowohl einzuschreibende als auch ausgelesene Daten sind daraus nicht bekannt, und die auf den Speicher zugreifenden Prozessoren oder andere Elemente sind alle untereinander gleichberechtigt, und jeder begonnene Zugriff wird erst vollständig abgeschlossen, bevor ein Zugriff von einer anderen Stelle begonnen wird.

Bei einem Zugriff zum Speicher wird jeweils ein Mehrbit-Datenwort parallel ausgelesen bzw. eingeschrieben. Häufig ist nun die Anzahl Bits eines Speicherworts unterschiedlich zur Anzahl Bits eines Datenworts für einen Prozessor, insbesondere umfaßt beispielsweise das Speicherwort acht Bit, während der Prozessor mit 16-Bit-Datenwörtern arbeitet. In diesem Falle ist das Datenwort eines Prozessor an zwei verschiedenen, zweckmäßig aufeinander folgenden Adressen des Speichers gespeichert. Um in diesem Fall einen möglichst einfachen Zugriff des Prozessors zum Speicher zu ermöglichen, ist es nach einer Ausgestaltung der Erfindung zweckmäßig, daß zur Übertragung von Wörtern mit p-facher Wortbreite des Speichers zu bzw. von mindestens einem Prozessor die Steuerschaltung nacheinander p zusätzliche Teiladressensignale für den Speicher erzeugt und mit den von dem Prozessor zugeführten Adressensignalen nacheinander p Speicherwörter im Speicher adressiert, daß für diesen Prozessor p Datenregister mit je einer Wortbreite des Speichers vorgesehen sind, die beim Lesen aus dem Speicher nacheinander p Wörter aus dem Speicher aufnehmen und nach Aufnahme des letzten Worts alle Wörter parallel an den Datenanschluß für diesen Prozessor abgeben und zum Schreiben in den Speicher parallel verschiedene Teile des vom Prozessor in den Speicher zu schreibenden Datenworts aufnehmen und nacheinander an den Speicher abgeben. Auf diese Weise erscheint der Speicher für den Prozessor wie mit einer entsprechend größeren Datenwortlänge, während für den Speicher lediglich mehrere aufeinanderfolgende Zugriffe erfolgen, ohne daß der Speicher ansonsten für eine größere Wortbreite ausgelegt sein muß. Auf diese Weise gelingt zusätzlich zur geschwindigkeitsmäßigen Entkopplung zwischen Speicher und Prozessoren auch eine Entkopplung der Datenwortbreite. Um die einzelnen Teile des breiteren Datenwortes des Prozessors auf die Datenwortbreite des Speichers anzupassen, ist es nach einer weiteren Ausgestaltung der Erfindung zweckmäßig, daß die p Datenregister für je einen Prozessor in Reihe geschaltet sind und ein Schieberegister bilden. Ein Schieberegister ist ein auch in anderem Zusammenhang verwendetes Mittel zur Parallel-Serien-Wandlung.

Digitale Systeme werden üblicherweise durch ein Taktsignal gesteuert bzw. synchronisiert. Ein System mit mehreren Prozessoren und einem gemeinsamen Speicher kann dabei einen gemeinsamen Taktgenerator verwenden, es ist jedoch auch möglich, jedem Prozessor einen Taktgenerator zuzuordnen. Insbesondere in letzterem Falle ist es nach einer Ausgestaltung der Erfindung zweckmäßig, daß die Steuerschaltung im wesentlichen aus zwei gleichen Teilen besteht, die die gleichen Anforderungssignale von den Prozessoren parallel empfangen und von denen der eine Teil mit ansteigenden Taktflanken und der andere Teil mit abfallenden Taktflanken gesteuert ist und derjenige Teil, dessen zugehörige Taktflanke als erste nach einem Anforderungssignal eines Prozessors auftritt, die Steuersignale für den Speicher und die Register erzeugt. Auf diese Weise wird jede Anforderung mit der nächsten ansteigenden oder abfallenden Taktflanke verarbeitet, so daß die Verzögerung der Verarbeitung eine Anforderung maximal eine halbe Taktzeit beträgt.

Es kann gelegentlich vorkommen, daß der bevorrechtigte Prozessor auf den Speicher zugreift, um ein Speicherwort zu lesen, das mittels eines unmittelbar vorher begonnenen Zugriffs durch einen nicht bevorrechtigten Prozessor neu eingeschrieben werden soll. Dieser Schreibzugriff des nicht bevorrechtigten Prozessors wird nun also unterbrochen, bevor das Einschreiben erfolgt ist, und der bevorrechtigte Prozessor würde dann noch das vorherige Datenwort auslesen. Um dies zu verhindern und dafür zu sorgen, daß der bevorrechtigte Prozessor stets die wirklich aktuellen Daten empfängt, ist eine weitere Ausgestaltung der Erfindung dadurch gekennzeichnet, daß die Steuerschaltung einen Adressenvergleicher enthält, der bei einem Anforderungssignal des bevorrechtigten Prozessors zum Lesen während eines noch nicht abgeschlossenen Schreibzugriffs durch einen nicht bevorrechtigten Prozessor die Leseadresse mit der Schreibadresse vergleicht und bei Gleichheit die vom nicht bevorrechtigten Prozessor in das zugehörige Datenregister eingeschriebenen Daten direkt in das Datenregister des bevorrechtigten Prozessors überträgt. Damit wird also erreicht, daß der bevorrechtigte Prozessor das neue Datenwort erhält, obwohl dies noch nicht in den Speicher eingeschrieben ist.

Ausführungsbeispiele der Erfindung werden nachstehend anhand der Zeichnung näher erläutert. Es zeigen
- Fig. 1: ein Blockschaltbild einer erfindungsgemäßen Schaltungsanordnung und deren Verbindung mit dem Speicher,
- Fig. 2: den Aufbau eines Datenregisters zur Anpassung unterschiedlicher Wortbreiten,
- Fig. 3: den Aufbau der Steuerschaltung aus zwei im wesentlichen gleichen Teilen,
- Fig. 4 und 5: zwei Zeitdiagramme,
- Fig. 6: einen Adressenvergleicher in der Steuerschaltung.

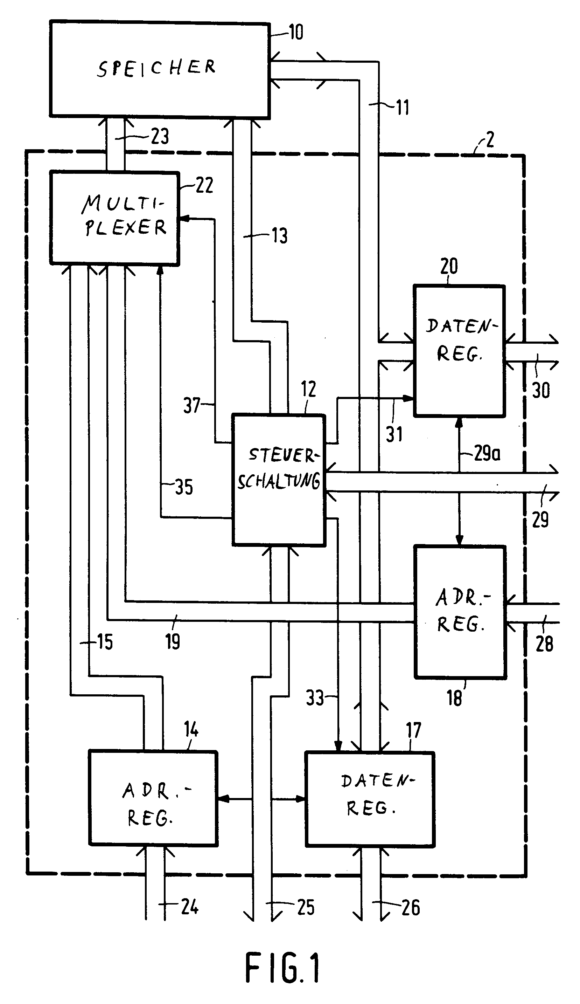

In Fig. 1 ist ein Speicher 10 über eine Schaltungsanordnung 2 mit Daten-, Adreß- und Steuerleitungen von zwei Prozessoren gekoppelt, die der Einfachheit halber nicht dargestellt sind. Zum einen Prozessor führt ein Adressenbus 24, ein Steuerleitungsbus 25 und ein Datenbus 26, während zum anderen, hier als bevorrechtigt geltenden Prozessor ein Adreßbus 28, ein Steuerleitungsbus 29 und ein Datenbus 30 führt. In entsprechender Weise können grundsätzlich noch weitere Prozessoren an die Steuerschaltung 2 angeschlossen werden. Über die Adreßbusse 24 bzw. 28 werden Adreßsignale von den Prozessoren der Schaltungsanordnung 2 zugeführt, während über die Datenbusse 26 bzw. 30 Datenwörter in beiden Richtungen übertragen werden können. Die Steuerbusse 25 bzw. 29 enthalten sowohl Leitungen, die zu den Prozessoren hinführen, als auch Steuerleitungen, die von diesen weg zur Schaltungsanordnung 2 führen.

Zu den Steuerleitungen gehört eine Leitung für ein Anforderungssignal, das gleichzeitig angibt, daß die auf dem entsprechenden Adreßbus liegenden Adressensignale gültig sind, und mit diesem Anforderungssignal werden daher auch die Adressensignale in ein Adressenregister 14 bzw. 18 eingeschrieben. Außerdem führt das Ansteuersignal auf eine Steuerschaltung 12, um dort die entsprechenden Steuersignale bzw. Folge von Steuersignaien auf dem Steuerbus 13 für den Speicher 10 zu erzeugen. Dabei steuert die Steuerschaltung 12 gleichzeitig auch die Priorität, d.h. die eventuelle Bevorrechtigung des entsprechenden Prozessors. Ferner erzeugt die Steuerschaltung 12 noch weitere Steuersignale, die später erläutert werden.

Die Ausgänge der Adressenregister 14 bzw. 18 führen über die Busse 15 bzw. 19 auf einen Multiplexer 22, der über die Leitung 37 von der Steuerschaltung 12 gesteuert einen dieser Busse 15 bzw. 19 auf die Adressenleitung 23 für den Speicher 10 durchschaltet. Statt dessen könnten auch die Adressenregister 14 bzw. 18 über sogenannte Tri-State-Ausgänge verfügen, die direkt miteinander und mit dem Adressenbus 23 des Speichers 10 verbunden sind und die von der Steuerschaltung 12 bei Bedarf niederohmig geschaltet werden.

Für die Datenbusse 26 bzw. 30 der angeschlossenen Prozessoren ist jeweils ein Datenregister 17 bzw. 20 vorgesehen, wobei für beide Übertragungsrichtungen jeweils ein eigenes Datenregister für ein vollständiges Prozessor-Datenwort vorgesehen sein kann, oder die Ein- und Ausgänge eines einzigen Datenregisters für ein Prozessor-Datenwort werden entsprechend der Datenrichtung umgeschaltet. Die Datenrichtung wird durch ein entsprechendes Signal im Steuerbus 25 bzw. 29 bestimmt, und zwar durch das sogenannte Schreibsteuersignal, das angibt, ob ein Zugriff zum Speicher 10 für einen Schreibvorgang oder einen Lesevorgang erfolgen soll. Im Falle eines Schreibvorgangs werden die zugehörigen Daten über den Datenbus 26 bzw. 30 von dem betreffenden Prozessor zusammen bzw. vor dem Schreibsteuersignal zugeführt und mit diesem Steuersignal in das betreffende Datenregister unmittelbar eingeschrieben. Ferner erreicht ein solches Schreibsteuersignal die Steuerschaltung 12, die daraufhin ein entsprechendes Steuersignal über den Steuerbus 13 zum Speicher 10 liefert und ferner über ein Auswahlsignal über die Verbindung 31 bzw. 33 den entsprechenden Datenregister-Ausgang auswählt und die darin enthaltenden Daten über den Datenbus 11 dem Datenanschluß des Speichers 10 zuführt.

Im Falle eines Zugriffs für einen Lesevorgang wird eine definierte Zeitspanne nach dem Auswählen und Anlegen einer Adresse über den Adreßbus 23 an den Speicher 10 ein ausgelesenes und über den Datenbus abgegebenes Datenwort in eines der Datenregister 17 bzw. 20 durch ein entsprechendes Steuersignal auf der Verbindung 31 bzw. 33 eingeschrieben, und dieses Datenwort steht dann auf dem Datenbus 26 bzw. 30 dem betreffenden Prozessor zur Verfügung, während der jeweils andere oder ggf. ein weiterer Prozessor bereits einen neuen Zugriff zum Speicher 10 auslöst.

In dem beschriebenen Beispiel wird nun angenommen, daß der an die Busse 28, 29 und 30 angeschlossene Prozessor 16-Bit-Datenwörter verarbeitet, während der Speicher 10 an jeder Speicheradresse nur ein 8-Bit-Datenwort enthält. In diesem Falle werden bei jeder Anforderung aus diesem Prozessor unmittelbar aufeinanderfolgend zwei Adressen des Speichers 10 angesteuert und die dabei ausgelesenen Datenwörter in das Datenregister 20 nacheinander eingeschrieben und parallel über den Datenbus 30 ausgegeben. Zur Steuerung der Aufeinanderfolge der beiden Datenwörter im Speicher 10 ist der Adreßbus 19 für die Adressen dieses Prozessors um eine Leitung 35 erweitert, die von der Steuerschaltung 12 kommt. Diese Leitung 35 führt zunächst den einen binären Wert, und sobald das an der betreffenden Adresse im Speicher 10 gespeicherte Datenwort ausgelesen und im Datenregister 20 gespeichert ist, wird das Signal auf der Leitung 35 auf den anderen binären Wert umgeschaltet (wenn diese Leitung das Adressenbit niedrigster Wertigkeit darstellt, wird dadurch die benachbarte Adresse im Speicher 10 angesteuert), und das nun ausgelesene Datenwort wird ebenfalls in das Datenregister 20 durch ein entsprechendes Signal auf der Verbindung 31 von der Steuerschaltung 12 eingeschrieben.

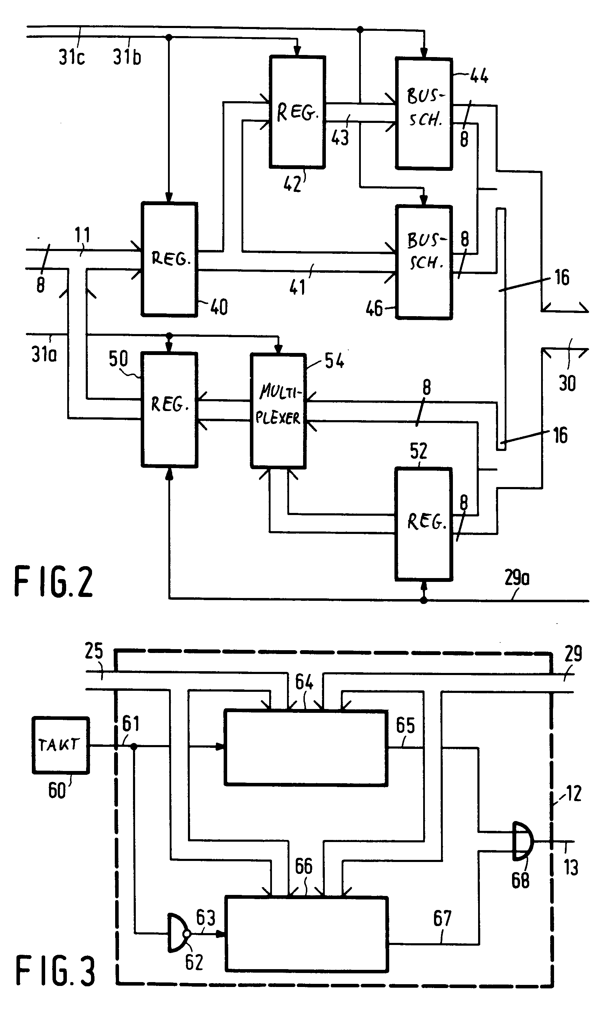

Ein möglicher Aufbau des Datenregisters 20 für diese Anpassung der Datenwortbreite des Speichers auf die größere Datenwortbreite des zugehörigen Prozessors ist in Fig. 2 dargestellt. Darin führt der Datenbus 11 auf den Eingang eines Registers 40 mit der Breite eines Speicher-Datenwortes, das in diesem Falle 8 Bit breit ist, und der Ausgang 41 des Registers 40 führt über einen geschalteten Busschalter 46 auf die Leitungen für die Datenbits höchster Wertigkeit des Datenbusses 30, und außerdem führt der Ausgang 41 des Registers 40 auf den Eingang eines weiteren Registers 42 mit 8 Bit Breite, dessen Ausgang 43 über einen weiteren geschalteten Bustreiber 46 mit den anderen Leitungen des Datenbusses verbunden sind. Die Busschalter 44 und 46 sind zunächst offen.

Wenn das erste Datenwort aus dem Speicher über den Datenbus 11 zugeführt wird, wird es durch ein Signal auf einer Leitung 31b von der Steuerschaltung 12 in Fig. 1 in das Register 40 eingeschrieben. Gleichzeitig wird der frühere Inhalt des Registers 40 in das Register 42 eingeschrieben, was hier jedoch nicht weiter von Bedeutung ist. Das zweite über den Datenbus 11 zugeführte Datenwort wird ebenfalls durch ein entsprechendes Signal auf der Leitung 31b in das Register 40 eingeschrieben, das nun das zweite Datenwort enthält, während das erste Datenwort gleichzeitig in das Register 42 übernommen wird. Anschließend werden die Busschalter 44 und 46 geschlossen, so daß die beiden 8-Bit-Datenwörter als ein 16-Bit-Datenwort dem Prozessor zugeführt werden können.

In entsprechender Weise sind für das Einschreiben eines 16-Bit-Datenwortes in den Speicher zwei 8-Bit-Register 50 und 52 vorgesehen, von denen das Register 50 den entsprechenden 8-Bit-Teil des Prozessor-Datenwortes über einen Multiplexer 54 erhält. Das Einschreiben in die Register 50 bzw. 52 erfolgt durch ein Schreibsteuersignal über die Leitung 29a innerhalb des Steuerbusses 29.

Zunächst wird also das im Register 50 enthaltene 8-Bit-Datenwort über den Datenbus 11 dem Speicher 10 zugeführt und an der Adresse eingeschrieben, die durch den einen binären Wert auf der Leitung 35 bestimmt ist. Danach wird der binäre Wert auf der Leitung 35 gewechselt und über die Leitung 31a das im Register 52 enthaltene Datenwort über den Multiplexer 54 in das Register 50 eingeschrieben, das dann über den Datenbus 11 dem Speicher 10 zugeführt und darin eingeschrieben wird. Statt dessen können die beiden Register 50 und 52 auch parallel mit dem Eingang 30 verbunden sein, wobei der Multiplexer 54 selbstverständlich wahlweise einen der Ausgänge der Register 50 oder 52 mit dem Datenbus 11 verbindet.

Die Steuerschaltung 12 enthält u.a. eine an sich bekannte Prioritätssteuerschaltung, die der Anforderung des am Steuerbus 29 angeschlossenen Prozessors Vorrang gibt über eine Anforderung des am Steuerbus 25 angeschlossenen Prozessors, sowie einige Auswahlschaltungen, die in entsprechender Weise Steuerleitungen aus dem Steuerbus 29 bzw. 25 auswählt und über den Bus 13 dem Speicher 10 zuführt. Ferner enthält die Steuerschaltung 12 eine Ablaufsteuerung, die beispielsweise die Steuersignale zum Einschreiben aus dem Speicher 10 ausgelesener Daten in das zugehörige Datenregister eine vorgegebene Zeitspanne nach dem Auswählen und Weiterleiten der betreffenden Adresse erzeugt. Diese Zeitverzögerung sowie der übrige Ablauf für die Erzeugung der Steuersignale wird durch die Taktsignale eines Taktgenerators gesteuert, der in Fig. 1 der Übersichtlichkeit halber nicht näher dargestellt ist. Dieser Taktgenerator kann auch die beiden prozessoren oder wenigstens einen davon steuern, es könne jedoch auch beide Prozessoren eigene Taktgeneratoren aufweisen, wobei die Frequenzen der davon erzeugten Taktsignale sehr unterschiedlich sein können. Die Erzeugung der Steuersignale kann jedoch erst mit der nächsten Taktflanke nach einem Anforderungssignal beginnen. Dadurch können Wartezeiten bis nahezu einer Taktzykluszeit auftreten, abhängig davon, wann das Anforderungssignal innerhalb dieses Taktzyklus auftritt.

Um diese Wartezeit zu verkürzen, ist der Aufbau einer Steuerschaltung 12 in Fig. 3 schematisch dargestellt. Darin enthält die Steuerschaltung 12 zwei im wesentlichen gleiche Teile 64 und 66, die hier vereinfacht als Blöcke dargestellt sind, da sich der interne Aufbau aus den über die Steuerbusse 25 bzw. 29 zugeführten Steuerleitungen und die für den jeweils verwendeten Speicher erforderlichen Steuersignale ergibt. Die Schaltungen in beiden Teilen 64 und 66 werden von einem Taktgenerator 60 mittels Taktsignalen gesteuert, die dem Teil 64 über die Leitung 61 direkt und dem Teil 66 über den Inverter 62 und die Leitung 63 invertiert zugeführt werden. Dadurch reagiert auf ein Anforderungssignal auf dem Steuerbus 25 bzw. 29 derjenige Teil, bei dem als erstes eine aktive Taktflanke nach dem Anforderungssignal auftritt. Die auf den Ausgängen 65 bzw. 67 der Teile 64 und 66 erzeugten Ausgangssignale werden zusammengefaßt, was hier symbolisch durch die ODER-Schaltung 68 angedeutet ist, und das jeweils aktive Signal bzw. die aktive Signalflanke zur Steuerung des Speichers über den Ausgang bzw. den Steuerbus 13 für den Speicher abgegeben.

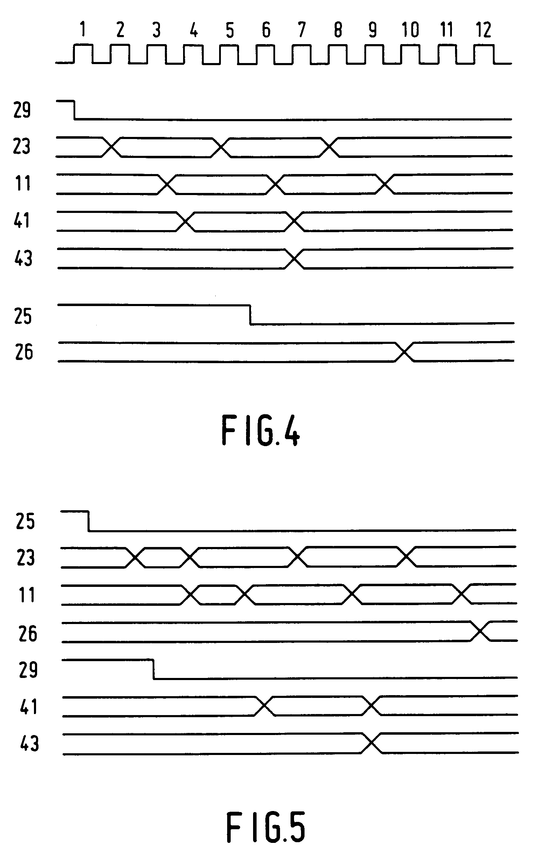

Der Ablauf eines Zugriffs durch beide an die in Fig. 1 dargestellte Schaltungsanordnung angeschlossenen Prozessoren soll anhand des beispielsweisen Zeitdiagramms in Fig. 4 näher erläutert werden. In der ersten Zeile ist das Taktsignal des Taktgenerators 60, der in Fig. 3 angegeben ist, dargestellt, bei dem die einzelnen Taktimpulse von 1 bis 12 numeriert sind, wobei davon ausgegangen wird, daß Prozessoren angeschlossen sind, bei denen zwischen zwei aufeinanderfolgenden Anforderungen für einen Zugriff mindestens 12 Taktimpulse liegen, auch wenn die Prozessoren unabhängige Taktgeneratoren aufweisen.

Die einzelnen Zeitdiagramme in Fig. 4 sind im übrigen mit den Ziffern bezeichnet, die die Leitungen bzw. Busse in den Schaltungen der Fig. 1 bis 3 bezeichnen, auf denen die Signale des Zeitdiagramms auftreten.

Vor dem ersten Impuls tritt ein Anforderungssignal auf dem Steuerbus 29 des bevorrechtigten Prozessors auf. Die dadurch ausgelöste Verarbeitung und Auswahl des Adressensignals möge einen Taktzyklus erfordern, so daß zu Beginn des zweiten Taktimpulses die richtige Adresse auf dem Adreßbus 23 des Speichers 10 anliegt. Nach 1 1/2 Taktzyklen erscheint dann auf dem Datenbus 11 das aus dem Speicher 10 ausgelesene Datenwort, das mit Beginn des vierten Taktimpulses in das Register 40 eingeschrieben wird und damit auf der Verbindung 41 erscheint. Mit Beginn des fünften Taktimpulses wird durch den Signalwechsel auf der Leitung 35 in Fig. 1 die folgende Adresse über den Adreßbus 23 dem Speicher 10 zugeführt, und 1 1/2 Taktzyklen später erscheint auf dem Datenbus 11 das nächste Speicherwort, das mit Beginn des siebten Taktimpulses in das Register 40 eingeschrieben wird und damit auf der Verbindung 43 erscheint, während der vorherige Inhalt in das Register 42 übernommen wird. Damit können die Busschalter 44 und 46 in Fig. 2 freigegeben werden, so daß nun das vollständige Datenwort auf dem Datenbus 30 dem Prozessor zur Verfügung steht.

In der Zwischenzeit ist jedoch bereits eine Anforderung des anderen Prozessors auf dem Steuerbus 25 eingetroffen, der jedoch durch den laufenden Zugriff des bevorrechtigten Prozessors in einem Wartezustand gehalten wird. Die zugehörige Adresse wird in das Adressenregister 14 übernommen, und sobald der vorhergehende Zugriff abgeschlossen ist, d.h. das zweite Speicherwort in das Register übernommen ist und damit der Warte-Status beendet wird, wird mit Beginn des achten Taktimpulses die neue Adresse dem Speicher 10 zugeführt, wodurch nach 1 1/2 Taktzyklen wieder das neue Datenwort auf dem Datenbus 11 erscheint und mit Beginn des zehnten Taktimpulses in das Datenregister 17 eingeschrieben wird und somit auf dem Datenbus 26 für diesen Prozessor erscheint. Währenddessen braucht die Übernahme des noch auf dem Datenbus 30 anstehenden Datenwortes noch nicht abgeschlossen zu sein. In entsprechender Weise steht das Datenwort auf dem Datenbus 26 noch an, während der nächste Zugriff des bevorrechtigten Prozessors bereits erfolgen kann.

In dem Zeitdiagramm in Fig. 5 ist das Auftreten einer Anforderung des bevorrechtigten Prozessors angenommen, während der Zugriff für den nicht bevorrechtigten Prozessor bereits durch das entsprechende Signal auf dem Steuerbus 25 begonnen hat. Dieses möge hier kurz vor der Rückflanke des ersten Taktimpulses liegen, so daß die Adresse auf dem Adreßbus 23 für den Speicher 10 mit der Rückflanke des zweiten Taktimpulses angelegt wird, wobei also in Fig. 3 der Teil 66 der Steuerschaltung 12 wirksam ist.

Mit Beginn des dritten Taktimpulses erscheint nun auf dem Steuerbus 29 eine Anforderung des bevorrechtigten Prozessors. Die zugehörige Adresse erscheint mit Beginn des vierten Taktimpulses auf dem Adreßbus 23. Etwa gleichzeitig erscheint auch das bei dem abgebrochenen Zugriff ausgelesene Datenwort auf dem Datenbus 11, jedoch ist dieses durch den etwa gleichzeitig auftretenden Adreßwechsel nicht mehr zuverlässig bzw. stabil, so daß es nicht mehr in das Datenregister 17 übernommen werden kann. Durch den Adreßwechsel mit Beginn des vierten Taktimpulses erscheint am Ende des fünften Taktimpulses jedoch der erste Teil des Datenwortes für den bevorrechtigten Prozessor, der mit Beginn des sechsten Taktimpulses in das Register 40 übernommen wird und auf der Verbindung 41 erscheint. In entsprechender Weise wie in Fig. 4 dargestellt wird nun der zweite Teil des Datenwortes adressiert und in das Register 40 übernommen, während der erste Teil in das Register 42 überschrieben wird. Dies geschieht mit Beginn des neunten Taktimpulses.

Damit ist der Zugriff des bevorrechtigten Prozessors im wesentlichen abgeschlossen, und zum frühesten Zeitpunkt danach, nämlich mit Beginn des zehnten Taktimpulses, wird nun wieder die Adresse des nicht bevorrechtigten Prozessors, dessen Zugriff noch nicht beendet war, auf den Adreßbus 23 für den Speicher 10 gegeben, und das ausgelesene Wort wird mit Beginn des zwölften Taktimpulses in das Datenregister 17 eingeschrieben und erscheint nun auf dem Datenbus 26. Da nun jedoch zwischen dem Beginn der Anforderung auf dem Steuerbus 29 und der Abgabe des zugehörigen Datenwortes eine längere Zeit liegt, muß der zugehörige Prozessor gegebenenfalls durch ein entsprechendes Signal von der Steuerschaltung 12 in einen Wartezustand gesetzt werden, bis der Zugriff des bevorrechtigten Prozessors beendet ist. Dies ist insbesondere von Bedeutung, wenn die Taktfrequenzen der Prozessoren sehr unterschiedlich sind und vor allem die Taktfrequenz des nicht bevorrechtigten Prozessors wesentlich höher ist.

Die beschriebenen Vorgänge laufen in entsprechender Weise beim Einschreiben eines Datenwortes ab, so daß diese Vorgänge nicht gesondert dargestellt werden. Jeder Zugriff zum Schreiben beginnt jedoch zweckmäßig zunächst mit einem Lesevorgang bei der einzuschreibenden Adresse, der dann in einen Schreibvorgang umgeschaltet wird. Beim Einschreiben eines Datenwortes entfällt jedoch ein eventueller Wartezustand des nicht bevorrechtigten Prozessors, wenn dieser Schreibvorgang durch einen Zugriff des bevorrechtigten Prozessors unterbrochen wird, da die einzuschreibenden Daten dann bereits in das Datenregister des nicht bevorrechtigten Prozessors eingeschrieben sind.Die Fortsetzung des Einschreibvorgangs erfolgt nach Beendigung des unterbrechenden Zugriffs durch den bevorrechtigten Prozessor ebenso wie beim Lesen automatisch durch die Steuerschaltung 12.

Es sei darauf hingewiesen, daß die Anzahlen der Taktzyklen bei den beschriebenen Abläufen nur beispielsweise gewählt sind und abhängig von dem genauen Aufbau der Steuerschaltung und des Speichers auch anders gewählt werden können.

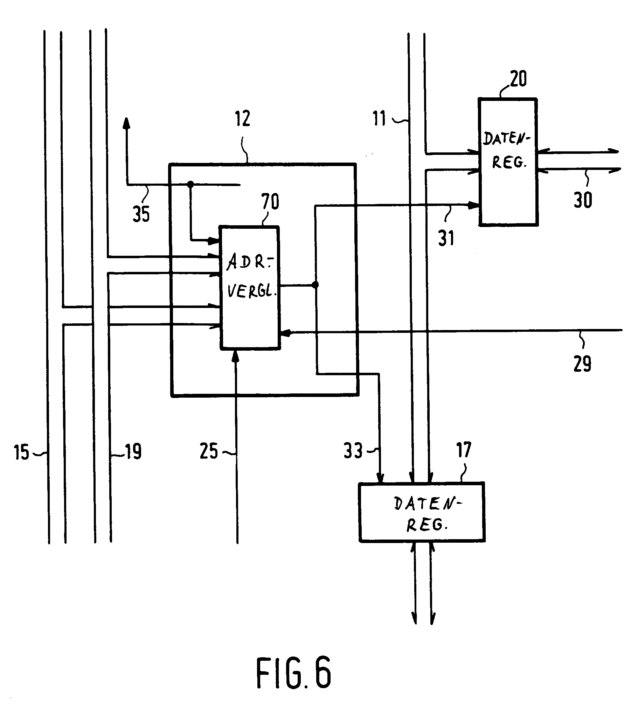

Wenn ein Schreibvorgang eines nicht bevorrechtigten Prozessors durch einen Lesezugriff des bevorrechtigten Prozessors unterbrochen wird und dabei dieselbe Adresse gelesen werden soll, in die der nicht bevorrechtigte Prozessor einschreiben wollte, soll gewährleistet werden, daß der bevorrechtigte Prozessor tatsächlich das neu einzuschreibende, noch nicht im Speicher enthaltene Wort empfängt. Dies geschieht mit einer Ergänzung der Steuerschaltung 12, die in Fig. 6 dargestellt ist. Dabei sind nur die Teile der Fig. 1 nochmals dargestellt und mit gleichen Bezugszeichen versehen, die in diesem Zusammenhang von Bedeutung sind.

In der Steuerschaltung 12 ist ein Adressenvergleicher 70 vorhanden, der die beiden auf den Bussen 15 und 19 vorhandenen Adressen empfängt. Zusätzlich empfängt der Vergleicher 70 auch noch das Signal auf der Leitung 35, das ein Teil der Adresse des bevorrechtigten Prozessors darstellt. Wenn nun der Adressenvergleicher 70 eine Gleichheit der Adresse auf dem Bus 15 mit der Adresse auf dem Bus 19 einschließlich der Leitung 35 feststellt, und gleichzeitig wird über die Steuerleitung 25 vom nicht bevorrechtigten Prozessor ein Schreibzugriff gemeldet und über die Steuerleitung 29 vom bevorrechtigten Prozessor ein Lesezugriff, wird über die Verbindung 33 das Datenregister 17 angesteuert, um die vom nicht bevorrechtigten Prozessor einzuschreibenden Daten auf den Datenbus 11 zu geben, und über die Verbindung 31 wird das Datenregister 20 des bevorrechtigten Prozessors angesteuert, um das nun auf dem Datenbus 11 vorhandene Datenwort zu übernehmen. Dabei wird selbstverständlich das Ansteuern des Speichers zum Lesen unterdrückt. Auf diese Weise empfängt also das Datenregister 20 das aktuelle Datenwort der angesteuerten Adresse, obwohl dies noch nicht in den Speicher eingeschrieben ist, und gibt dies über den Datenbus 30 an den bevorrechtigten Prozessor weiter.

## Patentansprüche

1. Schaltungsanordnung zum Steuern des Zugriffs auf einen Speicher durch mindestens zwei Prozessoren mit einer taktgesteuerten Steuerschaltung, die Anforderungssignale von den Prozessoren empfängt und daraus Steuersignale für den Zugriff zum Speicher erzeugt und die Ausführung eines Zugriffs für einen Prozessor unterbricht, wenn vor Beendigung dieses Zugriffs ein Anforderungssignal des bevorrechtigten Prozessors auftritt,
dadurch gekennzeichnet, daß für jeden Prozessor für die eingehenden und ausgehenden Daten Datenregister (17, 20) vorgesehen sind, die jeweils zwischen den Datenanschluß (11) des Speichers (10) und den Datenanschluß (26, 30) des betreffenden Prozessors geschaltet sind, und
daß die Steuerschaltung (12) bei Auftreten eines Anforderungssignals zum Schreiben von Daten in den Speicher (10) die vom Prozessor gelieferten Daten unmittelbar in das zugehörige Datenregister (17, 20) einschreibt und zum Lesen von Daten aus dem Speicher (10) eine vorgegebene Zeitspanne nach dem Anforderungssignal die am Datenausgang (11) des Speichers (10) abgegebenen Daten in das zugehörige Datenregister (17, 20) einschreibt, sofern in dieser Zeitspanne kein Anforderungssignal des bevorrechtigten Prozessors aufgetreten ist, und bei Auftreten eines Anforderungssignals des bevorrechtigten Prozessors während der Ausführung des Zugriffs für einen anderen Prozessor diesen bevorrechtigten Zugriff zunächst ausführt und danach automatisch den nicht vollständig durchgeführten Zugriff weiterführt.

2. Schaltungsanordnung nach Anspruch 1,
dadurch gekennzeichnet, daß zur Übertragung von Wörtern mit p-facher Wortbreite des Speichers (10) zu bzw. von mindestens einem Prozessor die Steuerschaltung (12) nacheinander p zusätzliche Teiladressensignale (35) für den Speicher (10) erzeugt und mit den von dem Prozessor zugeführten Adressensignalen nacheinander p Speicherwörter im Speicher (10) adressiert, daß für diesen Prozessor p Datenregister (40, 42; 50, 52) mit je einer Wortbreite des Speichers (10) vorgesehen sind, die beim Lesen aus dem Speicher nacheinander p Wörter aus dem Speicher aufnehmen und nach Aufnahme des letzten Worts alle Wörter parallel an den Datenanschluß (30) für diesen Prozessor abgeben und zum Schreiben in den Speicher parallel verschiedene Teile des vom Prozessor in den Speicher zu schreibenden Datenworts aufnehmen und nacheinander an den Speicher (10) abgeben.

3. Schaltungsanordnung nach Anspruch 2,
dadurch gekennzeichnet, daß die p Datenregister für je einen Prozessor in Reihe geschaltet sind und ein Schieberegister bilden.

4. Schaltungsanordnung nach einem der vorhergehenden Ansprüche, mit einem Taktgenerator zum Erzeugen eines Taktsignals,
dadurch gekennzeichnet, daß die Steuerschaltung (12) im wesentlichen aus zwei gleichen Teilen (64, 66) besteht, die die gleichen Anforderungssignale von den Prozessoren parallel empfangen und von denen der eine Teil (64) mit ansteigenden Taktflanken und der andere Teil (66) mit abfallenden Taktflanken gesteuert ist und derjenige Teil, dessen zugehörige Taktflanke als erste nach einem Anforderungssignal eines Prozessors auftritt, die Steuersignale für den Speicher und die Register (17, 20; 40, 42, 50, 52) erzeugt.

5. Schaltungsanordnung nach einem der vorhergehenden Ansprüche,
dadurch gekennzeichnet, daß die Steuerschaltung (12) einen Adressenvergleicher (70) enthält, der bei einem Anforderungssignal des bevorrechtigten Prozessors zum Lesen während eines noch nicht abgeschlossenen Schreibzugriffs durch einen nicht bevorrechtigten Prozessor die Leseadresse mit der Schreibadresse vergleicht und bei Gleichheit die vom nicht bevorrechtigten Prozessor in das zugehörige Datenregister (17) eingeschriebenen Daten direkt in das Datenregister (20) des bevorrechtigten Prozessors überträgt.

## Claims

1. A circuit arrangement for controlling the access to a memory by at least two processors, comprising a clock pulse controlled control circuit which receives request signals from the processors, generates control signals therefrom for access to the memory, and interrupts the execution of an access for one processor when a request signal from the privileged processor appears before termination of said access, characterized in that for each processor there are provided data registers (17, 20) for the incoming and outgoing data, which data registers are connected between the data terminal (11) of the memory (10) and the data terminal (26, 30) of the relevant processor, and that in response to the appearance of a request signal for the writing of data in the memory (10) the control circuit (12) writes the data supplied by the processor directly into the associated data register (17, 20) and, for the reading of data from the memory (10), writes the data supplied on the data output (11) of the memory (10) into the associated data register (17, 20) a predetermined period of time after the request signal, provided that no request signal has occurred from the privileged processor during said period of time and, in the event of a request signal from the privileged processor during the execution of the access for another processor, first executes said privileged access and subsequently automatically continues said non-completed access.

2. A circuit arrangement as claimed in Claim 1, characterized in that for the transmission of words having a p-fold word width of the memory (10) to or from at least one processor, the control circuit (12) successively generates p additional sub-address signals (35) for the memory (10) and addresses successively p memory words in the memory (10) by means of the address signals supplied by the processor, for said processor there being provided p data registers (40, 42; 50, 52), each of which has a word width of the memory (10) and stores successively p words from the memory when the memory is read and outputs, after acceptance of the last word, all words in parallel on the data terminal (30) for this processor and, for a write operation in the memory, takes up in parallel different parts of the data word to be written into the memory by the processor and outputs these parts successively to the memory (10).

3. A circuit arrangement as claimed in Claim 2, characterized in that the p data registers for each processor are connected in series and form a shift register.

4. A circuit arrangement as claimed in any one of the preceding Claims, comprising a clock generator for generating a clock signal, characterized in that the control circuit (12) essentially consists of two identical parts (64, 66) which receive the same request signals from the processors in parallel, one part (64) being controlled by positive-going clock pulse edges while the other part (66) is controlled by negative-going clock pulse edges, the control signals for the memory and the registers (17, 20; 40, 42, 50, 52) being generated by the part whose associated clock pulse edge occurs first after a request signal from a processor.

5. A circuit arrangement as claimed in any one of the preceding Claims, characterized in that the control circuit (12) comprises an address comparator (70) which, upon a request signal from the privileged processor to read during a not yet terminated write access by a non-privileged processor, compares the read address with the write address and, in the case of correspondence, directly transfers the data written into the associated data register (17) by the non-privileged processor to the data register (20) of the privileged processor.

## Revendications

1. Montage de circuit pour la commande de l'accès à une mémoire par au moins deux processeurs, comportant un circuit commandé par impulsions d'horloge, qui reçoit des signaux de demande des processeurs et produit à partir de ces signaux des signaux de commande pour l'accès à la mémoire et interrompt le déroulement d'un accès pour un processeur lorsqu'un signal de demande du processeur prioritaire apparaît avant la fin de cet accès, caractérisé en ce que, pour chaque processeur sont prévus, pour les données entrantes et sortantes, des registres de données (17, 20) qui sont respectivement branchés entre la connexion de données (11) de la mémoire (10) et la connexion de données (26, 30) du processeur concerné, et que le circuit de commande (12), à l'apparition d'un signal de demande pour l'introduction de données dans la mémoire (10), introduit les données fournies par le processeur directement dans le registre de données (17, 20) concerné et, pour l'extraction de données de la mémoire (10), introduit un intervalle de temps prédéterminé après le signal de demande, les données délivrées à la sortie de données (11) de la mémoire (10), dans le registre de données (17, 20) concerné, pour autant qu'aucun signal de demande du processeur prioritaire n'apparaisse dans cet intervalle de temps, et à l'apparition d'un signal de demande du processeur prioritaire, le circuit, au cours de l'exécution de l'accès pour un autre processeur, exécute tout d'abord cet accès prioritaire et poursuit ensuite automatiquement l'exécution de l'accès qui n'a pas été complètement réalisé.

2. Montage de circuit selon la revendication 1, caractérisé en ce que, pour transmettre des mots d'une largeur de mot de p fois de la mémoire (10) à au moins un processeur ou depuis au moins un processeur, le circuit de commande (12) produit successivement p signaux d'adresse partielle supplémentaires (35) pour la mémoire (10) et adresse successivement p mots dans la mémoire (10) avec les signaux d'adresse fournis par le processeur, en ce que, pour ce processeur, p registres de données (40, 42; 50, 52) sont présents avec chacun une largeur de mot de la mémoire (10), qui reçoivent, lors de l'extraction de la mémoire successivement p mots de la mémoire et délivrent, après réception du dernier mot, tous les mots en parallèle à la connexion de données (30) pour ce processeur, et reçoivent pour l'introduction dans la mémoire, diverses parties en parallèle du mot de données à introduire dans la mémoire par le processeur et les délivrent successivement à la mémoire (10).

3. Montage de circuit selon la revendication 2, caractérisé en ce que les p registres de données pour chaque processeur sont connectés en série et forment un registre à décalage.

4. Montage de circuit selon l'une quelconque des revendications précédentes, comportant un générateur d'impulsions d'horloge pour produire un signal d'horloge, caractérisé en ce que le circuit de commande (12) est sensiblement constitué de deux parties égales (64, 66), qui reçoivent en parallèle les mêmes signaux de demande des processeurs et dont la première partie (64) est commandée par des flancs d'impulsions d'horloge montants et l'autre partie (66) par des flancs d'impulsions d'horloge descendants, la partie, dont le flanc d'impulsion d'horloge associé apparaît en premier après un signal de demande d'un processeur, produisant les signaux de commande pour la mémoire et les registres (17, 20; 40, 42, 50, 52).

5. Montage de circuit selon l'une quelconque des revendications précédentes, caractérisé en ce que le circuit de commande (12) contient un comparateur d'adresses (70), qui compare, lors d'un signal de demande du processeur prioritaire en vue d'effectuer la lecture pendant un accès d'écriture qui n'est pas encore terminé par un processeur qui n'est pas prioritaire, l'adresse de lecture à l'adresse d'écriture et, en cas d'égalité, transmet les données introduites par le processeur non prioritaire dans le registre de données (17) associé, directement dans le registre de données (20) du processeur prioritaire.
